# EUROPEAN PATENT SPECIFICATION

(11) **EP 1 800 033 B1**
(45) Date of publication and mention of the grant of the patent: **16.02.2011**
(21) Application number: 05788509.7
(22) Date of filing: 29.09.2005
(51) Int. Cl.: F16K 11/085, F16K 11/12, F02G 1/043

(54) **A SPLITTER VALVE**
VERTEILERVENTIL
VANNE DE SEPARATION

(30) Priority: 29.09.2004 GB 0421634
(43) Date of publication of application: 27.06.2007
(73) Proprietor: Microgen Engine Corporation Holding B.V., 7071 EC Ulft (NL)
(72) Inventor: HASKO, Stephen, Michael, Huntingdon,Cambridgeshire PE28 4TQ (GB); LOWRIE, James, Robert, Derbyshire DE1 2RR (GB); CLARK, David, Anthony, Huntingdon,Cambridgeshire PE26 2RZ (GB)
(74) Representative: Draper, Martyn John
(86) International application number: PCT/GB2005/003761
(87) International publication number: WO 2006/035238

(56) References cited:
- WO-A-02/12007
- FR-A- 2 844 571
- GB-A- 2 342 979
- JP-A- 5 306 783
- US-A- 3 443 793
- US-A- 3 946 685

## Description

The present invention relates to a splitter valve for splitting an inlet stream into a plurality of outlet streams, the valve comprising an inlet; a plurality of outlets, one for each outlet stream; an outer sleeve having a plurality of first outlet orifices, one for each stream; an inner element moveably retained within the outer sleeve and having an inlet and a plurality of second outlet orifices, one for each stream; wherein the relative proportion of the inlet stream fed to each outlet is determined by the relative position of the inner element and outer sleeve, and wherein the first and second outlet orifices are shaped such that the flow through each outlet varies substantially linearly with the relative position of the inner element and outer sleeve.

Such a valve will be subsequently referred to as "of the kind described" and is the subject of our earlier International application WO 2004/085893 .

A valve of the kind described has been particularly designed for the gas stream of a domestic combined heat and power (dchp) system employing a linear free piston Stirling engine. However, this valve and the present invention are believed to be applicable to any situation where a fluid stream is to be divided into two or more streams.

In a dchp system employing a linear free piston Stirling engine, the engine supplies some of the domestic power and heat requirement. However, to supplement the heat output of the engine, it is necessary to provide a supplementary burner. In order to reduce the cost and space of the unit, and also to reduce the parasitic power consumption, the air intake for both the Stirling engine burner and the supplementary burner is supplied by a single fan. The air from the single fan is then divided into two streams which, having been combined with fuel, feed the two burners.

The valve of WO 2004/085893 is proving to be successful for this purpose.

The present application relates to a number of improvements to a valve of the kind described.

According to a first aspect of the invention, a valve of the kind described is characterised in that a perforate member is provided across at least one outlet to at least partially laminarise the flow leaving the outlet.

This can reduce the effect of turbulence in the air leaving the or each outlet, and ensures that the flow is suitable for use with a downstream venturi or other flow metering device.

The member may be a plate or block.

The upstream face of the member is preferably concave to create a more parabolic velocity profile to improve the flow through a downstream venturi.

According to a second aspect of the present invention a valve of the kind described is characterised in that a ramp surface is provided within the inner element at the end furthest from the inlet to direct the inlet stream towards the outlet furthest from the inlet.

This ramp is provided effectively to direct the flow towards the outlet furthest from the inlet (which can be arranged to be the outlet for the highest flow) smoothly through a change of direction thereby providing a streamlined flow.

It will be appreciated that the first and second aspects of the invention may be combined thereby obtaining the combined benefits of both in terms of smoothing the flow through the valve.

The present invention will now be described with reference to the accompanying drawings, in which:
Fig. 1 is a schematic diagram of a gas train in which a splitter valve is intended to be used;
Fig. 2 is a perspective view of an outer sleeve of the valve of WO 2004/085893;
Fig. 3 is a similar perspective of an inner sleeve of the valve of WO 2004/085893;
Fig. 4 is a perspective view of a splitter valve with four outlets from WO 2004/085893;
Fig. 5A is a cross section of the inner element according to the second aspect of the present invention;
Fig. 5B is a perspective view of the inner element as shown in Fig. 5A;
Fig. 5C is a schematic plan view of the element shown in Fig. 5A with the top surface removed and the orifices shown in dotted lines;
Fig. 6A is a perspective view of an outer sleeve in accordance with the first aspect of the present invention; and
Fig. 6B is a cross-section through line 6B-6B in Fig. 6A.

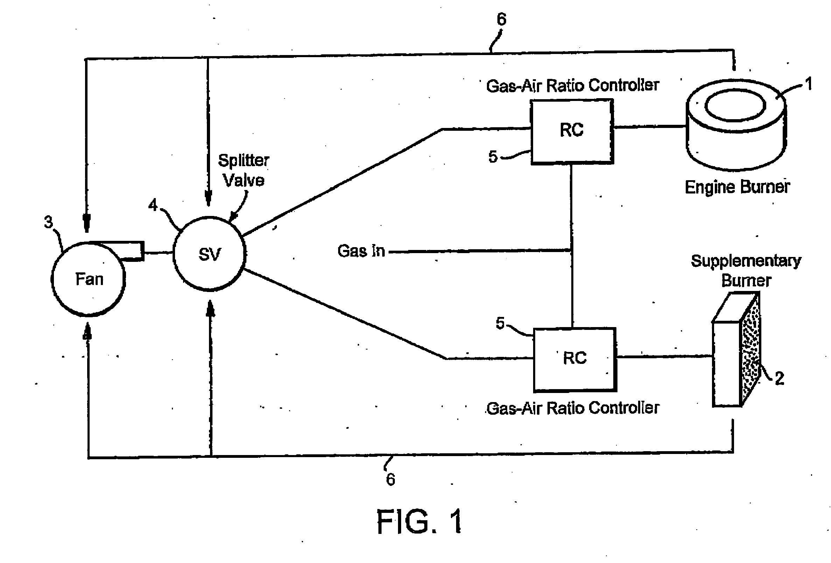

The basic valve to which this engine relates is described in detail in WO 2004/085893. This is described as follows with reference to Figs. 1 to 4.

The gas train for a domestic combined heat and power assembly based on a linear free piston Stirling engine is shown in Fig. 1.

The arrangement comprises two burners, namely the Stirling engine burner 1 and supplementary burner 2. The Stirling engine burner 1 is fired according to the domestic demand for heat. As a by-product, this will also generate electricity. However, in order to ensure that there is sufficient capacity to supply all of the domestic heat load, the supplementary burner 2 is provided. The two burners are therefore modulated according to the domestic heat requirement. Air to the burners is supplied from a single fan 3. This stream is split in a splitter valve 4 which is described in greater detail below. Combustible gas is added to each of the air streams under the control of gas/air ratio controllers 5. Information about the demands of the burners 1,2 is fed along control line 6 to the fan 3 and splitter valve 4. The speed of the fan 3 and the position of the splitter valve 4 are controlled accordingly, such that the requirements of the two burners can be satisfied independently. For example, if the engine burner 1 is fully active and the supplementary burner 2 is off, the fan will be operated at an intermediate speed and the splitter valve will ensure that all of the air (subject to a possible purge flow) is fed to the engine burner. If both burners are fully active, the fan will operate at maximum speed and the splitter valve will split the flow between the two burners according to their demands.

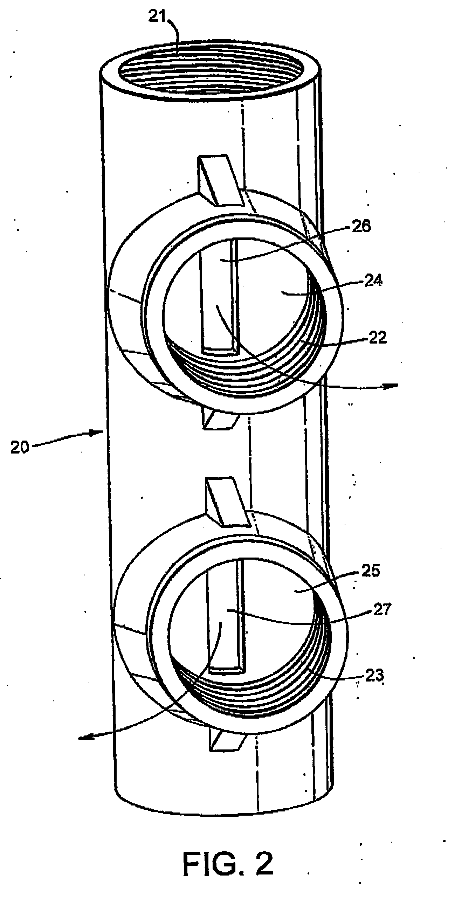

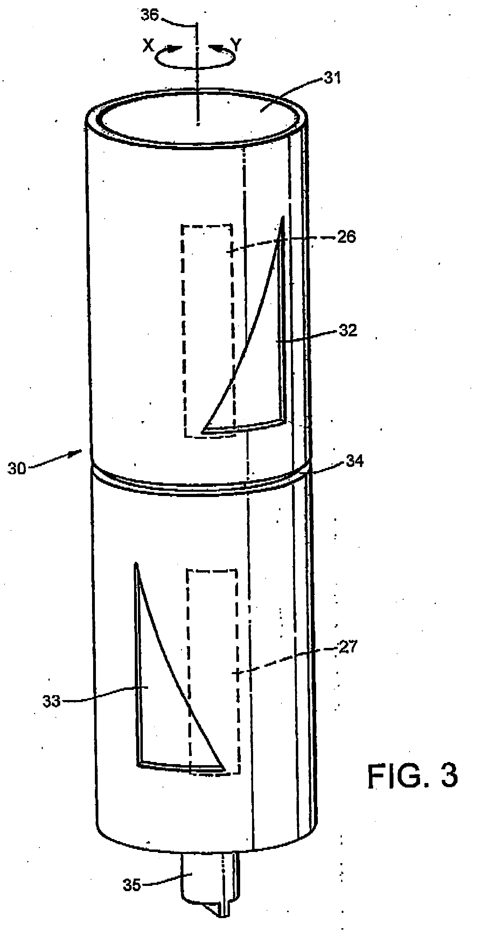

The splitter valve will be described in greater detail with reference to Figs. 2 and 3. Fig. 2 shows an outer sleeve 20 while Fig. 3 shows an inner sleeve 30 which, in use, is rotatably received within outer sleeve 20. Outer sleeve 20 has a screw threaded connection 21 which provides an inlet port in communication with the fan 3. Two similar screw threaded ports 22 and 23 corresponding to first 24 and second 25 outlets provide a connection for ducts leading to the two burners 1,2. The two outlets 24,25 are spaced axially along the sleeve and are both on the same side of the sleeve although they could be circumferentially offset. Each outlet has a first outlet orifice 26,27 which is an axially extending elongate rectangular through aperture in the wall of the outer sleeve 20.

These first outlet apertures 26,27 are shown in dashed lines in Fig. 3 for clarity.

In Fig. 3, the inner sleeve 30 is shown. The sleeve is hollow and has an inlet 31 at the end corresponding to the inlet port 21 to receive air from the fan 3. Second outlet orifices 32,33 are elongate generally triangular through orifices in the wall of the outer sleeve 30. A gas seal (not shown) is provided in an annular groove 34 in the outer wall of the inner sleeve 30 between the second outlet orifices. This prevents flow from one outlet to the other between the outer 20 and inner 30 sleeves.

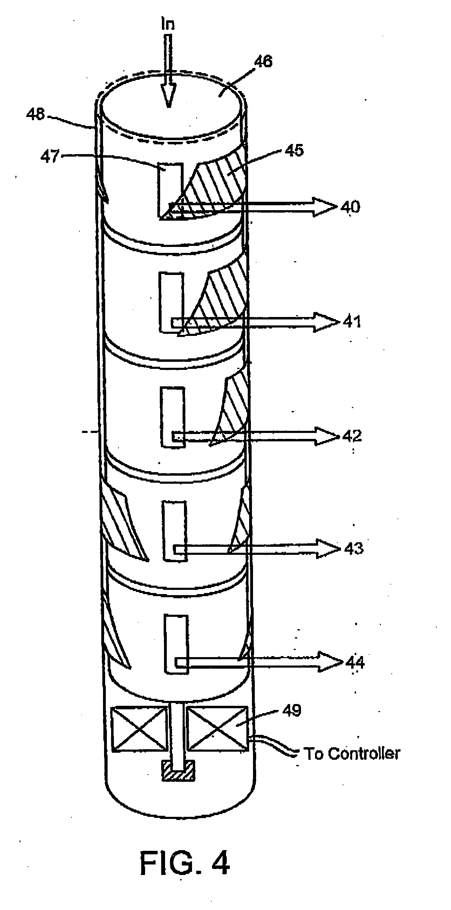

The inner sleeve 30 has a spindle 35 axially extending from the end opposite to the inlet 31. This is connected to a motor (not shown) allowing the inner sleeve 30 to be rotated about axis 36. Alternatively, rotation of the inner sleeve could be effected by a solenoid/electro-magnet contained within the outer sleeve 20. This latter option would enable to the valve to be self-contained and therefore suitable for use with a fuel/air mixture which would allow the splitter valve 4 to be used downstream of the gas entry point, rather than upstream as shown in Fig. 1. A solenoid/electro-magnet arrangement is shown as 40 in Fig. 4.

The operation of the valve will now be described with particular reference to the upper outlet 24. As the inner sleeve is rotated about axis 36 in the direction of arrow X, the second orifice 32 progressively overlaps to a greater and greater degree with the first orifice 26. It will be seen that there is a non-linear relationship between the rotary position of the inner sleeve 30 and the area of overlap such that during initial interaction between the first and second orifices, the area of overlap is relatively small (as compared to the case where second orifice has a similar rectangular shape to that of the first orifice). The exact relationship is determined functionally to ensure that there is, as nearly as possible, a linear relationship between the rotational position of the inner sleeve 30 and the outlet flow. The illustrated configuration of outlets is one which is suitable for a particular purpose. However, it is envisaged that the profile will vary slightly with each particular application, and this variation will be determined by the requirements of the particular function.

A more detailed discussion of the relationship between the sizes of the orifices and the flow distribution of both streams is given in our earlier application WO 2004/081362.

It will be appreciated from Fig. 3 that as the sleeve 30 is rotated in the X direction, a greater proportion of flow is directed to the first outlet 24, while movement in the opposite Y direction causes more of the flow to be diverted to the second outlet 25.

It will be appreciated that the first and second orifices could be swapped, such that the rectangular orifice was provided on the inner sleeve and a triangular sleeve was provided on the outer sleeve. Alternatively, both orifices can be provided with a non-rectangular shape.

This valve also opens up the possibility of diverting the inlet flow to more than two orifices. Fig. 4 schematically shows five outlets 40, 41, 42, 43, 44. Second orifices 45 are provided on an inner sleeve 46 and first orifices 47 are provided on outer sleeve 48. A solenoid 49 in the lower end of the housing of the valve provides relative rotational movement between the inner 46 and outer 48 sleeves. The structure and operation of this valve is broadly similar Eo that of Figs. 2 and 3, so that a detailed explanation is not required here. It will be noted, however, that each of the oblique edged second orifices 45 is offset to a different degree from the rectangular first orifices such that each relative angular position of the inner 46 and outer 48 sleeves provides a different flow to each of the outlets. Owing to the fixed relationship between the first and second sets of orifices, independent control of the outlet streams is not possible. However, this relationship is suitable, for example, for a multistage burner. For example, the first outlet 40 may feed the engine burner 1, while the second 41 to fifth 44 outlets may feed separate stages of the supplementary burner 2 which are required to be fired in sequence to provide different levels of heat output from the supplementary burner. This is disclosed in greater detail in co-pending PCT application WO 2004/085820.

If greater independence is required from the outlet flows, then the inner sleeve 46 could be split into two or more independently moveable inner sleeves.

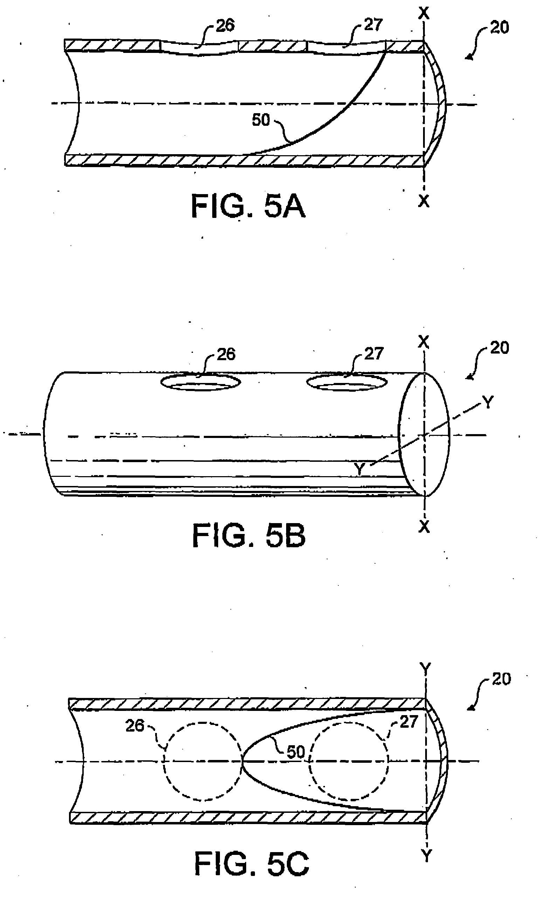

The improvements in accordance with the various aspects of the present invention will now be described with reference to Figs. 5 to 11.

Figs. 5A to 5C illustrate an outer sleeve in accordance with the second aspect of the present invention. The outer sleeve 20 is provided with first and second outlet orifices 26, 27. The outer sleeve 20 has a ramp 50 which extends from the side furthest from the outlet orifices in a gradually increasing curve up to the edge of orifice 27 such that the flow flowing from left to fight through the sleeve is directed smoothly towards the outlet orifice 27. The valve is preferably configured so that the orifice 27 is connected to the burner with the greater flow requirement. In other words, the valve is arranged so that the bulk of the air is directed to the outlet orifice 27.

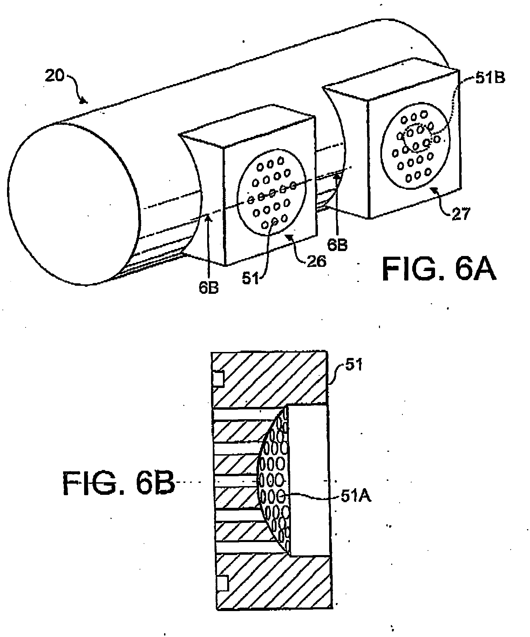

A first aspect of the invention is shown in Figs. 6A and 6B. Here, the outer sleeve 20 is provided, at the outlet orifice 26, 27, with perforated plates 51 which are fixed to the outer surface of the outer sleeve 20. These plates serve to smooth the flow of air through the outlet orifices 26, 27. The plates may be formed with integral through holes or the holes may be drilled as a separate step. Alternatively, the plates may be formed by attaching a number of hollow tubes together effectively forming a 'honeycomb' structure.

As shown in Fig. 6B the upstream surface 51A of the perforated plate 51 is concave. Effectively, this provides a shorter flow path through the plate towards the centre of the block and a longer path towards its periphery which has the effect of creating a flow profile which has higher velocity towards the centre and lower velocity towards the periphery. The flow plates 51 may be provided with a region 51B shown in Fig. 6A which is without perforations. When the inner sleeve is in a position in which its orifice only slightly overlaps with the plate 51, there is a tendency for the flow to be concentrated in the region of this overlap. By not providing any orifices in this region, the flow is more evenly distributed through the remaining orifices in the just open condition.

## Claims

1. A splitter valve for splitting an inlet stream into a plurality of outlet streams, the valve comprising an inlet; a plurality of outlets, one for each outlet stream; an outer sleeve having a plurality of first outlet orifices, one for each stream; an inner element moveably retained within the outer sleeve and having an inlet and a plurality of second outlet orifices, one for each stream; wherein the relative proportion of the inlet stream fed to each outlet is determined by the relative position of the inner element and outer sleeve, and wherein the first and second outlet orifices are shaped such that the flow through each outlet varies substantially linearly with the relative position of the inner element and outer sleeve; **characterised in that** a perforate member is provided across at least one outlet to at least partially laminarise the flow leaving the outlet.

2. A valve according to claim 1, wherein the member is a plate.

3. A valve according to claim 1, wherein the member is a block.

4. A claim according to any of claims 1 to 3, wherein the member is concave.

5. A splitter valve for splitting an inlet stream into a plurality of outlet streams; the valve comprising an inlet; a plurality of outlets, one for each outlet stream; an outer sleeve having a plurality of first outlet orifices, one for each stream; an inner element moveably retained within the outer sleeve and having an inlet and a plurality of second outlet orifices, one for each stream; wherein the relative proportion of the inlet stream fed to each outlet is determined by the relative position of the inner element and outer sleeve, and wherein the first and second outlet orifices are shaped such that the flow through each outlet varies substantially linearly with the relative position of the inner element and outer sleeve; **characterised in that** a ramp surface is provided within the inner element at the end furthest from the inlet to direct the inlet stream towards the outlet furthest from the inlet.

6. A splitter valve according to claim 5, wherein a perforate plate is provided across at least one outlet to at least partially laminarise the flow leaving the outlet.

## Patentansprüche

1. Teilungsventil zum Teilen eines Eingangsstroms in eine Mehrzahl von Ausgangsströmen, wobei das Ventil umfasst: einen Eingang; eine Mehrzahl von Ausgängen, für jeden Ausgangsstrom einen; eine Außenhülse, die eine Mehrzahl erster Ausgangsöffnungen aufweist, für jeden Strom eine; ein Innenelement, das beweglich in der Außenhülse gehalten ist und einen Eingang und eine Mehrzahl zweiter Ausgangsöffnungen aufweist, für jeden Strom eine; wobei das Relativverhältnis des jedem Ausgang zugeführten Eingangsstroms durch die Relativposition des Innenelements und der Außenhülse bestimmt ist, und wobei die ersten und die zweiten Ausgangsöffnungen so geformt sind, dass der Fluss durch jeden Ausgang im Wesentlichen linear mit der Relativposition des Innenelements und der Außenhülse variiert;
**dadurch gekennzeichnet, dass** ein perforiertes Element über wenigstens einen Ausgang bereitgestellt ist, um den den Ausgang verlassenden Fluss wenigstens teilweise zu laminarisieren.

2. Ventil nach Anspruch 1, wobei das Element eine Platte ist.

3. Ventil nach Anspruch 1, wobei das Element ein Block ist:

4. Ventil nach einem der Ansprüche 1 bis 3, wobei das Element konkav ist.

5. Teilungsventil zum Teilen eines Eingangsstroms in eine Mehrzahl von Ausgangsströmen, wobei das Ventil umfasst: einen Eingang; eine Mehrzahl von Ausgängen, für jeden Ausgangsstrom einen; eine Außenhülse, die eine Mehrzahl erster Ausgangsöffnungen aufweist, für jeden Strom eine; ein Innenelement, das beweglich in der Außenhülse gehalten ist und einen Eingang und eine Mehrzahl zweiter Ausgangsöffnungen aufweist, für jeden Strom eine; wobei das Relatiwerhältnis des jedem Ausgang zugeführten Eingangsstroms durch die Relativposition des Innenelements und der Außenhülse bestimmt ist, und wobei die ersten und die zweiten Ausgangsöffnungen so geformt sind, dass der Fluss durch jeden Ausgang im Wesentlichen linear mit der Relativposition des Innenelements und der Außenhülse variiert;
**dadurch gekennzeichnet, dass** eine Rampenfläche in dem Innenelement an dem von dem Eingang entferntesten Ende bereitgestellt ist, um den Eingangsstrom zu dem von dem Eingang entferntesten Ausgang zu führen.

6. Teilungsventil nach Anspruch 5, wobei eine perforierte Platte über wenigstens einen Ausgang bereitgestellt ist, um den den Ausgang verlassenden Fluss wenigstens teilweise zu laminarisieren.

## Revendications

1. Soupape de répartition permettant de répartir un flux d'entrée en une pluralité de flux de sortie, la soupape comprenant une entrée ; une pluralité de sorties, une pour chaque flux de sortie ; un manchon externe ayant une pluralité de premiers orifices de sortie, un pour chaque flux ; un élément interne retenu mobile dans le manchon externe et ayant une entrée et une pluralité de deuxièmes orifices de sortie, un pour chaque flux ; où la proportion relative du flux d'entrée alimentée à chaque sortie est déterminée par la position relative de l'élément interne et du manchon externe, et où les premier et deuxième orifices de sortie sont dimensionnés de sorte que l'écoulement à travers chaque sortie varie de manière essentiellement linéairement avec la position relative de l'élément interne et du manchon externe ; **caractérisée en ce qu'**un élément perforé est prévu à travers au moins une sortie afin de rendre l'écoulement quittant la sortie au moins partiellement laminaire.

2. Soupape selon la revendication 1, dans laquelle l'élément est une plaque.

3. Soupape selon la revendication 1, dans laquelle l'élément est un bloc.

4. Soupape selon l'une des revendications 1 à 3, dans laquelle l'élément est concave.

5. Soupape de répartition permettant de répartir un flux d'entrée en une pluralité de flux de sortie, la soupape comprenant une entrée ; une pluralité de sorties, une pour chaque flux de sortie ; un manchon externe ayant une pluralité de premiers orifices de sortie, un pour chaque flux ; un élément interne retenu mobile dans le manchon externe et ayant une entrée et une pluralité de deuxièmes orifices de sortie, un pour chaque flux ; où la proportion relative du flux d'entrée alimentée à chaque sortie est déterminée par la position relative de l'élément interne et du manchon externe, et où les premier et deuxième orifices de sortie sont dimensionnés de sorte que l'écoulement traversant chaque sortie varie de manière essentiellement linéaire avec la position relative de l'élément interne et du manchon externe ; **caractérisée en ce que** la surface en rampe est prévue dans l'élément interne au niveau de l'extrémité la plus éloignée de l'entrée afin de diriger le flux d'entrée vers la sortie la plus éloignée de l'entrée.

6. Soupape de réparation selon la revendication 5, dans laquelle une plaque perforée est prévue à travers au moins une sortie afin de rendre l'écoulement quittant la sortie au moins partiellement laminaire.
